(19) **Europäisches Patentamt**

**European Patent Office**

**Office européen des brevets**

(11) **EP 1 726 611 A1**

(12) **EUROPEAN PATENT APPLICATION**
published in accordance with Art. 158(3) EPC

(43) Date of publication:
**29.11.2006 Bulletin 2006/48**

(51) Int Cl.:
*C08J 5/00* (2006.01)  *B29C 49/06* (2006.01)
*B65D 1/09* (2006.01)  *B29K 67/00* (2006.01)
*B29L 22/00* (2006.01)  *C08L 67/02* (2006.01)

(21) Application number: **05710640.3**

(22) Date of filing: **24.02.2005**

(86) International application number:
**PCT/JP2005/002989**

(87) International publication number:
**WO 2005/080480 (01.09.2005 Gazette 2005/35)**

(84) Designated Contracting States:
**AT BE BG CH CY CZ DE DK EE ES FI FR GB GR HU IE IS IT LI LT LU MC NL PL PT RO SE SI SK TR**

(30) Priority: **24.02.2004 JP 2004047717**

(71) Applicant: **Mitsui Chemicals, Inc.**
**Minato-ku**
**Tokyo 105-7117 (JP)**

(72) Inventors:
• **HAMA, Takashi,**
**c/o Mitsui Chemicals, Inc.,**
**Sodegaura-shi,**
**Chiba 299-0265 (JP)**

• **HATABU, Susumu,**
**c/o Mitsui Chemicals, Inc.**
**Sodegaura-shi,**
**Chiba 299-0265 (JP)**

(74) Representative: **HOFFMANN EITLE**
**Patent- und Rechtsanwälte**
**Arabellastrasse 4**
**81925 München (DE)**

(54) **HOLLOW MOLDED ARTICLE COMPRISING POLYESTER RESIN**

(57)     It is an obj ect of the invention to provide a polyester resin from which a bottle superior in transparency and mechanical characteristics can be provided even though it has a large wall thickness.

A hollow bottle comprising a polyester resin containing a dicarboxylic acid unit and a diol unit, and having a vent plug portion, a shoulder portion, a body portion and a bottom portion, wherein;

(1) the wall thickness of the bottle body is 500 $\mu$m; and

(2) the content of a titanium atom is 1 ppm or more to 30 ppm or less.

It is preferable that the cooling-down crystallization temperature (Thc) of the bottle body portion be 170°C or less, and 97 mol% or more of all dicarboxylic acid units be terephthalic acid and 97 mol% or more of all diol units be ethylene glycol.

FIG. 2

**Description**

Field of the Invention

The present invention relates to a hollow bottle comprising polyesters and, particularly, to a hollow bottle enabling repetitive use and having high transparency.

Background Art

Various resins have been adopted depending on the type and purpose of the content to be filled as a raw material of containers for flavorings, oils, drinks, cosmetics, detergents and the like.

Among these resins, polyethylene terephthalates are superior in mechanical strength, heat resistance, transparency and gas barrier characteristics and are therefore particularly suitable as raw materials for containers used to fill drinks such as juices, refreshing drinks and carbonated drinks.

Among these containers, there is a container called a refillable and returnable bottle (hereinafter referred to as a returnable bottle) that is used in such a way that after it is used by consumers, it is collected, washed, and then refilled with a drink, that is offered on a sale. On the contrary, containers that are not repeatedly used are called a one-way bottle. It is required for the returnable bottle to have mechanical strength enough to stand to repetitive use, and therefore, a returnable bottle having a body portion 500 $\mu$m or more in thickness is usually used.

The polyethylene terephthalate used for such a bottle may be obtained by esterifying terephthalic acid or its ester-forming derivative and ethylene glycol or its ester-forming derivative, allowing the esterified product to undergo liquid-phase polycondensation in the presence of a polycondensation catalyst, then allowing the polymerized condensate to undergo solid-phase polycondensation. This polyethylene terephthalate is then supplied to a molding machine such as injection molding machine to form a hollow molding body preform. This preform is inserted into a mold having a predetermined shape to carry out stretch blow molding or to further carry out heat treatment (heat set), thereby molding the preform into a hollow molded container.

In this injection molding process, a molten resin is injected into the mold, cooled and solidified in the mold and then taken out of the mold. At this time, the returnable bottle preform has a wall thickness of 5 mm or more usually and is thicker than a one-way bottle preform which usually has a wall thickness of 4 mm or less. Therefore, crystallization proceeds in the cooling process in the mold and the preform may sometimes be whitened and hence becomes opaque.

The injected resin put into a molten state is cooled until it is solidified. In this case, crystallization proceeds when the temperature exceeds the glass transition point (Tg). It is considered that the returnable bottle preform has a high wall thickness and the time required to cool the molten resin to a temperature of Tg or less when the resin is injection-molded is long, leading to easy crystallization during that period.

A polyethylene terephthalate obtained by polycondensation using an antimony catalyst is used for the returnable bottle. Though antimony is added to work as the polycondensation catalyst, it also works as a nucleating agent which promotes crystallization of resin. Therefore, the polyethylene terephthalate obtained using an antimony catalyst having strong nucleating agent action poses the problem concerning the crystallization of the preform and the opacification of a hollow container obtained by the blow molding of the preform.

As a means for constraining the crystallization, a method in which the molecular weight is increased is known. For example, it is described in Non-Patent Document 1, page 224 that the rate of crystallization is decreased by increasing the molecular weight (intrinsic viscosity) of polyethylene terephthalate.
However, this method has the problem that the rise in molecular weight brings about an increase in polymerization time, causing a reduction in resin productivity.

Similarly, as a means for constraining the crystallization, there is a method in which a monomer other than terephthalic acid and ethylene glycol is copolymerized. For example, it is described in Non-Patent Document 1, pages 562 to 563 that when other components are copolymerized with polyethylene terephthalate, this causes reduced crystallinity and isophthalic acid or 1,4-cyclohexanedimathanol is disclosed as copolymerizing components.

However, when the amount of copolymerizing monomers other than terephthalic acid and ethylene glycol is increased, the melting point of the resin is reduced and it is therefore necessary to lower the temperature in the solid-phase polymerization process, causing a reduction in resin productivity. Further, there is also the problem that the mechanical characteristics of the hollow bottle, particularly, pressure resistance and resistance to stress cracking characteristics are reduced.

Non-Patent Document 1: "SATURATED POLYESTER RESIN HANDBOOK", edited by Kazuo Yugi, The Nikkan Kogyo Shimbun Ltd. (1989)

Disclosure of the Invention

Problems to be solved by the Invention

The present invention intends to solve the aforementioned problems involved in the prior art and it is an object of the present invention to solve the problems specific to a polyethylene terephthalate returnable bottle having a high wall thickness when it is produced as a preform and as the bottle, the problems being that the time required to cool the molten resin to Tg or less when molding the resin is long and crystallization is easily caused during that period. Specifically, it is an obj ect of the present invention to provide a thick hollow molded article superior in transparency without causing a reduction in the productivity of a polyester resin due to an increase in polymerization time of the resin and without causing a reduction in mechanical characteristics such as pressure-proof characteristics and anti-stress cracking characteristics.

Means for Solving the Problem

As mentioned above, the polyethylene terephthalate polymerized using an antimony catalyst is suitably used for a one-way bottle. However, in the case of a returnable bottle, there is the problem specific to this type of bottle, the problem being that the wall thickness of the body portion of the bottle is usually 500 $\mu$m or more and the injected thickness of the preform is usually 5 mm or more, so that the resin is easily crystallized, which impairs the transparency. The inventors of the present invention have made earnest studies to solve this problem by a method other than prior technologies in which a copolymerizing monomer is introduced or the molecular weight of the resin is increased.

Because the elements used as the catalyst for polyethylene terephthalate have an influence on the crystallization of the resin, the inventors of the present invention have made studies by focusing on the type and amount of the elements to be contained, and as a result, unexpectedly found that if a titanium atom is used in a specific amount based on polyethylene terephthalate, the catalyst is superior in the balance between the activity as a polycondensation catalyst and crystallization promoting effect on the resin and also provides high transparency even if it is applied to a bottle or preform having a high wall thickness.

Specifically, the inventors have found that a preform containing a titanium atom in a specific amount and a hollow bottle obtained from the preform are superior in transparency. Also, a hollow bottle which comprises a polyethylene terephthalate resin containing a titanium atom in a specified amount and is provided with the body portion having a specific wall thickness or larger is superior in transparency and also in productivity and mechanical characteristics, to complete the present invention.

Accordingly, the present invention relates to:

a hollow bottle comprising a polyester resin containing a dicarboxylic acid unit and a diol unit and having a vent plug portion, a shoulder portion, a body portion and a bottom portion, wherein;

(1) the wall thickness of the bottle body portion is 500 $\mu$m; and
(2) the content of a titanium atom is 1 ppm or more and 30 ppm or less.

The hollow bottle of the present invention preferably uses a polyester resin produced using a titanium catalyst. The polyester resin contains a titanium atom in an amount of, preferably, 1 ppm or more and 30 ppm or less, more preferably 5 ppm or more and 30 ppm or less and most preferably 5 ppm or more and 20 ppm or less. When titanium atom is contained in an amount of 1 ppm or more and 30 ppm or less, this is preferable because proper polymerization activity is obtained and the transparency of the film is kept when the resin is molded. The polyester resin produced using a titanium catalyst may be suitably used because even a thick-wall preform has high transparency.

The content of an antimony atom in the polyester resin used for the hollow bottle of the present invention is preferably 100 ppm or less and particularly preferably 50 ppm or less. When the content of an antimony atom exceeds 100 ppm, the transparency of hollow bottle is sometimes deteriorated.

The hollow bottle of the present invention preferably has the following characteristics.

(3) The cooling-down crystallization temperature (Thc) of the bottle body portion is preferably 170°C or less.
When the cooling-down crystallization temperature (Thc) is 170°C or less, this is preferable because crystallization during molding can be constrained.

(4) 97 mol% or more of all dicarboxylic acid units are terephthalic acid and 97 mol% or more of all diol units are ethylene glycol.
When terephthalic acid and ethylene glycol are respectively 97 mol% or more, this is preferable because mechanical characteristics such as pressure resistance is good and a drop in melting point is small.

(5) The intrinsic viscosity is preferably in the range from 0.74 to 0.82 dl/g.

When the intrinsic viscosity is 0.74 or more, this is preferable because strength enough to stand to repetitive use is obtained whereas when the intrinsic viscosity is 0.82 dl/g or less, this is preferable in view of productivity.

(6) The melt viscosity is preferably in the range from 230 to 340 Pa·s.

When the melt viscosity is 230 or more, this is preferable because strength enough to stand to repetitive use is obtained whereas when the melt viscosity is 340 or less, this is preferable in view of productivity. The melt viscosity is measured at 270°C at a shear rate of 1333 sec.$^{-1}$.

(7) The density of the bottle body portion is preferably in the range from 1355 to 1365 kg/ m$^3$.

The hollow bottle of the present invention is obtained by blow-molding a cylindrical preform obtained by injection-molding a polyethylene terephthalate. A known method may be used for the injection molding of the preform and it is preferable to carry out this method at a molding temperature of 270 to 300°C in a molding cycle of 50 to 90 seconds. The preform contains a titanium atom in an amount of, preferably 1 ppm or more to 30 ppm or less and more preferably 5 ppm or more to 30 ppm or less. The wall thickness of the preform is in the range from preferably 4.5 to 7 mm and more preferably 5 to 6 mm. The preform like this is preferable in the point that it is resistant to crystallization during injection molding and has high transparency.

Effect of the Invention

The present invention can provide a hollow container having high strength, the hollow container being produced without deteriorating mechanical characteristics of a polyester resin such as productivity and pressure-proof characteristics and without any damage to the transparency when molding the resin into a molded article.

Brief Description of the Drawings

Fig. 1 is a sectional view of a preform.
Fig. 2 is a sectional view of a hollow bottle.

Explanations of the Symbols

1. Vent plug portion (non-stretched portion)
2. Height of a stretched portion
3. Outside diameter of a preform
4. Inside diameter of a preform
5. Thickness of a preform
6. Vent plug portion
7. Shoulder portion
8. Body portion
9. Bottom portion
10. Outside diameter of a bottle
11. Inside diameter of a bottle

Best Mode for carrying out the Invention

A method of producing a polyester hollow molded article according to the present invention will be explained in detail.

The obtained polyester hollow molded articles desirably contains a titanium atom and the content of a titanium atom is in a range preferably from 1 to 30 ppm and particularly from 5 to 20 ppm.

When the content of a titanium atom is in the above range, a molded article having a low crystallization temperature and being superior in transparency can be obtained maintaining high productivity.

The titanium catalyst used for the polycondensation of a polyester resin according to the hollow molded article of the present invention may be a known titanium compound such as an alkoxy titanium compound, and is preferably the following titanium compounds.

EP 1 726 611 A1

Specifically, the titanium catalyst comprises: (a) a solid titanium-containing compound that contains titanium, oxygen, carbon, hydrogen and an alkali metal and has a Ti-O-C bond, and has a maximum solubility of 1,000 ppm or more in terms of titanium atom in ethylene glycol when it is dissolved in 150°C ethylene glycol; or (a) and (b) an alkali metal compound.

(a) Solid titanium-containing compound

The solid titanium-containing compound (a) forming a catalyst for producing a polyester according to the present invention contains titanium, oxygen, carbon, hydrogen and, as required, an alkali metal and has a Ti-O-C bond.

The solid titanium-containing compound (a) contains titanium in an amount of 5 to 50% by weight and preferably (5 to 40)% by weight, oxygen in an amount of (35 to 75)% by weight and preferably (40 to 60)% by weight, carbon in an amount of 1 to 35% by weight and preferably (5 to 25)% by weight and hydrogen in an amount of (1 to 10) % by weight and preferably (1 to 6)% by weight.

Also, the alkali metal is contained in an amount range from 20/1 to 0.1/1 and preferably 10/1 to 0.1/1 in terms of molar ratio (alkali metal/titanium) of the alkali metal to a titanium atom in the solid titanium-containing compound (a).

In the solid titanium-containing compound (a), the weight ratio [Ti/C] of a titanium atom to a carbon atom in the compound is in the range from 50 to 1 and preferably 25 to 2.

The alkali metal may be either contained in the above solid titanium-containing compound (a) or used together with (a) when the polyester is produced.

The maximum solubility of the solid titanium-containing compound(a) in ethylene glycol is measured as follows: only ethylene glycol is used as a solvent, the solid titanium-containing compound (a) is dissolved in 100 g of ethylene glycol under heating at 150°C to measure the transparency of the solution by a haze meter, to find the dissolution amount which is the largest within a range of the haze not exceeding 10%, as the maximum solubility of the solid titanium-containing compound.

The solid titanium-containing compound (a) has an average particle diameter range from 1 to 30 $\mu$m and preferably 1.5 to 20 $\mu$m.

Also, the solid titanium-containing compound (a) has a 2θ (diffraction angle) ranging from 18° to 35°. The degree of crystallization that is originated from the structure of anatase type titanium dioxide and calculated from an X-ray diffraction pattern is preferably 50% or less.

(b) Alkali metal compound

The alkali metal compound (b) forming a catalyst for producing a polyester according to the present invention is at least one alkali metal compound selected from the group consisting of a single alkali metal, alkali metal hydride, alkali metal hydroxide, alkali metal alkoxide compound, alkali metal halide, and alkali metal salts of an acid selected from carbonic acid, nitric acid, nitrous acid, sulfuric acid, sulfurous acid, organic sulfonic acid, phosphoric acid, phosphorous acid, hypophosphorous acid, methaphosphoric acid, polyphosphoric acid, organic phosphonic acid, organic phosphinic acid, boric acid, aluminic acid, titanic acid, silicic acid, fatty acid, aromatic carboxylic acid, hydroxycarboxylic acid and amino acid.

Among these alkali metal compounds (b), sodium hydroxide, potassium hydroxide, sodium methoxide, sodium acetate, sodium stearate and the like are preferable.

These alkali metal compounds (b) may be used either singly or in combinations of two or more.

The solid titanium-containing compound (a) may contain compounds constituted of elements other than titanium, oxygen, carbon and hydrogen in satisfying the object of the present invention. Preferable examples of the compound include compounds of at least one element selected from magnesium, aluminum, cobalt, germanium and phosphorous. These compounds may be used either singly or in combinations of two or more.

Examples of the compound of an element selected from magnesium, aluminum and cobalt include fatty acid salts such as an acetates, carbonates, sulfates, nitrates, halides such as chlorides, acetyl acetonates and oxides. Among these examples, acetates and carbonates are preferable and magnesium compounds such as magnesium carbonate and magnesium acetate are more preferable.

Also, examples of the phosphorous compound include phosphates or phosphites of at least one metal selected from the I and II groups in the periodic chart, transition metals of the fourth period in the periodic chart, zirconium, hafnium and aluminum. Among these compounds, particularly, sodium phosphate, sodium dihydrogenphosphate, disodium hydrogenphosphate, potassium phosphate, potassium dihydrogenphosphate, dipotassium hydrogenphosphate, sodium phosphite and potassium phosphite are preferably used.

Examples of the germanium compound include germanium dioxide and germanium acetate.

The content of the magnesium compound is preferably 20 ppm or less as a magnesium atom in the polyester resin.

The content of the aluminum compound is preferably 20 ppm or less as an aluminum atom in the polyester resin.

The content of the cobalt compound is preferably 20 ppm or less as a cobalt atom in the polyester resin.

The content of the germanium compound is preferably 20 ppm or less as a germanium atom in the polyester resin.

The content of the phosphorous compound is preferably 5 ppm or more to 40 ppm or less as a phosphorous atom in the polyester resin.

It is preferable to use each element in the above range from the viewpoint of preventing the transparency of the polyester resin frombeing damaged and obtaining appropriate catalytic activity.

The total content of calcium, strontium, barium and manganese is preferably 5 ppm or less as atoms. When these elements are contained in a total amount of 5 ppm or more, the transparency of theproducedpolyester resin is sometimes impaired.

Though an antimony atom may be used together with titanium, the content of an antimony atom in the polyester according to the present invention is preferably 100 ppm or less and more preferably 50 ppm or less. If the content of an antimony atom exceeds 100 ppm, the transparency of the hollow bottle is easily deteriorated though the antimony atom has polycondensation activity. As the antimony compound, antimony acetate and antimony oxide may be exemplified.

When a titanium halide compound is used as a raw material in the above solid titanium-containing compound (a), the content of halogen elements is generally 0 to 10, 000 ppm and preferably 0 to 100 ppm.

The solid titanium-containing compound (a) may be dissolved in an ethylene-containing solution (c) containing ethylene glycol to use it as a catalyst. When the solid titanium-containing compound (a) is dissolved in the ethylene-containing solution (c), it is preferable to dissolve it in the presence of a basic compound such as the foregoing alkali metal compound (b).

When the solid titanium-containing compound (a) is dissolved in the ethylene glycol-containing solution (c), it is preferable to heat the mixture wherein the heating temperature is generally in the range from 100 to 200°C and preferably in the range from 110 to 195°C.

When the alkali metal compound (b) is used, it is used in such an amount that the molar ratio of the compound (b) to titanium contained in the solution is in the following range: alkali metal/titanium = 20/1 to 0.1 to 1.

When the solid titanium-containing compound (a) is dissolved in the ethylene glycol-containing solution (c) in the presence of the alkali metal compound (b) in the present invention, the ethylene glycol solution (c) containing a dissolution adjuvant maybe used according to the need. Also, in the case where the alkali metal compound (b) is not used when the solid titanium-containing compound (a) is dissolved in the ethylene glycol-containing solution (c), the ethylene glycol-containing solution (c) containing a dissolution adjuvant and/or an acid component may be used according to the need.

Examples of the dissolution adjuvant include glycerin, trimethylolpropane, propylene glycol, pentaerythritol and sorbitol. Among these compounds, glycerin or trimethylolpropane is preferable.

The dissolution adjuvant is used in an amount of 1 to 50% by weight and preferably 1 to 25% by weight based on the ethylene glycol-containing solution (c).

Examples of the acid component include sulfuric acid, organic sulfonic acids such as paratoluenesulfonic acid; and organic carboxylic acids such as oxalic acid, acetic acid and citric acid. Among these acids, sulfuric acid or an organic sulfonic acid is preferable.

The acid component is used in an amount of 0.1 to 20% by weight and preferably 0.1 to 10% by weight based on the ethylene glycol-containing solution.

A titanium-containing solution that is an ethylene glycol solution (c) in which the solid titanium-containing compound (a) is dissolved is thus prepared.

This titanium-containing solution is preferably transparent and the HAZE value of the solution measured by a haze meter according to the method which will be described later is 30% or less, preferably 20% or less and more preferably 10% or less.

In this titanium-containing solution, the content of titanium derived from the solid titanium-containing compound (a) is in the range usually from 500 to 100,000 ppm, preferably from 3, 000 to 100, 000 ppm and more preferably from 5,000 to 50, 000 ppm.

The above titanium-containing solution has a moisture content ranging usually from 0.05 to 15.0% by weight and preferably from 0.05 to 10% by weight.

When the moisture content of the titanium-containing solution is in the above range, this is preferable because the solution has good solubility and also good storage stability.

(Method of producing a polyester resin)

In the method of producing a polyester resin according to the present invention, an aromatic dicarboxylic acid or its ester formable derivative and an aliphatic diol or its ester formable derivative are polycondensed in the presence of the above catalyst for producing a polyester, to produce the polyester resin. One example of this method will be explained below.

(Raw materials to be used)

The polyester resin according to the present invention is obtained by polycondensing a dicarboxylic acid with a diol component, wherein terephthalic acid is used as the major dicarboxylic acid component and ethylene glycol is used as the major diol component.
The raw materials used in the method of producing a polyester resin according to the present invention are as follows: terephthalic acid or its ester formable derivative is used as the major carboxylic acid component and ethylene glycol or its ester formable derivative is used as the major diol component.
The content of terephthalic acid is preferably 97 mol% or more and more preferably 98 mol% or more based on all dicarboxylic acid components. The content of ethylene glycol is preferably 97 mol% or more and more preferably 98 mol% or more based on all diol acid component.
When the amounts of terephthalic acid and ethylene glycol are respectively 97 mol% or more, this is preferable because a reduction in resin productivity is not caused by an increase in polymerization time and a reduction in mechanical characteristics is not caused.

(Copolymerization monomer component)

A dicarboxylic acid and a diol component shown below may be copolymerized insofar as the amounts of terephthalic acid and ethylene glycol fall in the above ranges respectively.
As the dicarboxylic acid component other than terephthalic acid, phthalic acid is preferable and as the diol component other than ethylene glycol, cyclohexanedimethanol is preferable.
As the aromatic dicarboxylic acid other than terephthalic acid used in the present invention, an aromatic dicarboxylic acid such as phthalic acid, isophthalic acid, naphthalenedicarboxylic acid, diphenyldicarboxylicacidor diphenoxyethanedicarboxylic acid may be used in an amount 3 mol% or less. These dicarboxylic acids may be used in combinations of two or more.
As the aliphatic diol other than ethylene glycol, an aliphatic glycol such as cyclohexane dimethanol, trimethylene glycol, propylene glycol, tetramethylene glycol, neopentyl glycol, hexamethylene glycol and dodecamethylene glycol may be used in an amount range from 3 mol% or less. These diols may be used in combinations of two or more.
Also, in the present invention, for example, an aliphatic dicarboxylic acid such as adipic acid, sebacic acid, azelaic acid or decanedicarboxylic acid or an alicyclic dicarboxylic acid such as cyclohexanedicarboxylic acid may be used together with the aromatic dicarboxylic acid as a raw material. Also, for example, an alicyclic glycol such as cyclohexanedimethanol or an aromatic diol such as bisphenol, haydroquinone or 2,2-bis (4-β-hydroxyethoxyphenylpropane) may be used in an amount of 3 mol% or less together with the aliphatic diol as a raw material.
Moreover, in the present invention, a polyfunctional carboxylic acid or an alcohol compound such as trimesic acid, trimethylolethane, trimethylolpropane, trimethylolmethane and pentaerythritol may be used as a raw material. The amount of the polyfunctional compound to be used is preferably 1 mol% or less.

(Esterifying process)

First, terephthalic acid or its ester formable derivative and ethylene glycol or its ester formable derivative are esterified when the polyester resin is produced. Other dicarboxylic acid or diol component may be copolymerized according to the need. Specifically, a slurry containing terephthalic acid or its ester formable derivative and an aliphatic diol or its ester formable derivative is prepared.
Such a slurry contains ethylene glycol or its ester formable derivative in an amount of usually 1.005 to 1.4 mol and preferably 1.01 to 1.3 mol based on 1 mol of terephthalic acid or its ester formable derivative. This slurry is supplied continuously to an esterification reaction process.
The esterification reaction is preferably run using an apparatus in which two or more esterification reaction units are connected serially under the situation where ethylene glycol is refluxed with removing water produced by the reaction out of the system in a refiner.
The esterification reaction process is usually carried out in multistage wherein the esterification reaction in the first stage is usually run at a reaction temperature of 240 to 270°C and preferably 245 to 265°C under a pressure of 0.02 to 0.3MPaG (0.2 to 3 kg/cm$^2$G) and preferably 0. 05 to 0.2 MPaG (0.5 to 2 kg/cm$^2$G), and the esterification reaction in the final stage is usually run at a reaction temperature of 250 to 280°C and preferably 255 to 275°C under a pressure of 0 to 0.15 MPaG (0 to 1.5 kg/cm$^2$G) and preferably 0 to 0.13 MPaG (0 to 1.3 kg/cm$^2$G).
When the esterification reaction is run in two stages, the esterification reaction conditions in the first and second stages are in the above ranges respectively. When the esterification reaction is run in three or more stages, the esterification reaction conditions in the second stages to a stage just before the final stage may be between the esterification reaction conditions in the first stage and in the final stage.

When, for example, the esterification reaction is run in three stages, the reaction temperature may be usually 245 to 275°C and preferably 250 to 270°C and the reaction pressure may be usually 0 to 0.2 MPaG (0 to 2 kg/cm$^2$G) and preferably 0.02 to 0.15 MPaG (0.2 to 1.5 kg/cm$^2$G) in the esterification reaction of the second stage.

Although no particular limitation is imposed on the esterification reaction rate in each stage, the degree of a rise in the esterification reaction rate is distributed without a sudden change in each stage and it is desirable that the esterification reaction product in the final stage reach usually 90% or more and preferably 93% or more.

An esterification reaction product (low-grade condensate) from terephthalic acid, ethylene glycol and a copolymerization monomer component is obtained by this esterification process. The number average molecular weight of this low-grade condensate is about 500 to 5,000.

The low-grade condensate obtained in the esterification process like the above is then supplied to a polycondensation (liquid-phase polycondensation) process.

(Liquid phase polycondensation process)

In this liquid phase polycondensation process, the low-grade condensate obtained in the esterification process is heated at a temperature higher than the melting point (usually 250 to 280°C) of the polyester resin under reduced pressure in the presence of the aforementioned polyester production catalyst to carry out polycondensation. This polycondensation reaction is preferably run with removing unreacted ethylene glycol and copolymerization monomer components out of the system by distillation.

The polycondensation reaction process may be carried out in either one stage or multi stages. When, for example, the polycondensation reaction is run in multi stages, the polycondensation reaction in the first stage is usually run at a reaction temperature of 250 to 290°C and preferably 260 to 280°C under a pressure of 0.07 to 0.003 MPaG (500 to 20 Torr) and preferably 0.03 to 0.004 MPaG (200 to 30 Torr), and the polycondensation reaction in the final stage is usually run at a reaction temperature of 265 to 300°C and preferably 270 to 295°C under a pressure of 1 to 0.01 kPaG (10 to 0.1 Torr) and preferably 0.7 to 0.07 kPaG (5 to 0.5 Torr).

When the polycondensation reaction is run in three or more stages, the polycondensation reaction conditions in the second stages to a stage just before the final stage may be between the polycondensation reactions in the first stage and in the final stage. When, for example, the polycondensation process is run in three stages, the reaction temperature may be usually 260 to 295°C and preferably 270 to 285°C and the reaction pressure may be usually 7 to 0.3 kPaG (50 to 2 Torr) and preferably 5 to 0.7 kPaG (40 to 5 Torr) in the polycondensation reaction of the second stage.

In the polycondensation reaction, it is desirable to use the aforementioned solid titanium-containing compound (a) or titanium-containing solution in an amount of 0.001 to 0.2 mol% and preferably 0.002 to 0.1 mol% in terms of metal atom based on a terephthalic acid unit in the low-grade condensate.

Also, the polycondensation reaction is desirably run in the presence of a stabilizer.

Given as specific examples of the stabilizer are phosphorous compounds including phosphates such as trimethyl phosphate, triethyl phosphate, tri-n-butyl phosphate, trioctyl phosphate and triphenyl phosphate; phosphites such as triphenyl phosphite, trisdodecyl phosphite and trisnonylphenyl phosphite; phosphates such as methyl acid phosphate, ethyl acid phosphate, isopropyl acid phosphate, butyl acid phosphate, dibutyl phosphate, monobutyl phosphate and dioctyl phosphate, phosphoric acid and polyphosphoric acid.

The amount of such a phosphorous compound to be added is 0.005 to 0.2 mol% and preferably 0.01 to 0.1 mol% in terms of phosphorous atom based on terephthalic acid.

The intrinsic viscosity [IV] of the polyester resin obtained in the liquid-phase polycondensation process is 0.40 to 1.0 dl/g and preferably 0. 50 to 0.90 dl/g. Although no particular limitation is imposed on the intrinsic viscosity obtained in each stage except for the final stage, the degree of a rise in the intrinsic viscosity is distributed without a sudden change in each stage.

The polyester resin obtained in this polycondensation process is usually subjected to melt-extrusion molding into granulates (chip or pellet form).

(Solid phase polycondensation process)

The polyester resin obtained in this liquid-phase polycondensation process may be subjected to solid-phase polycondensation reaction as desired.

The granular polyester resin to be supplied to the solid-phase polycondensation process may be supplied to the solid-phase polycondensation process after it is heated to a temperature lower than the temperature at which the solid-phase polycondensation is run to carry out pre-crystallization in advance.

This pre-crystallization process may be carried out by heating the granular polyester resin that has been put in a dried state, at 120 to 200°C and preferably 130 to 180°C for 1 minute to 4 hours. Also, such pre-crystallization may be accomplished by heating the granular polyester resin at 120 to 200°C for over one minute in a water vapor atmosphere, a steam-containing inert gas atmosphere or in a steam-containing air atmosphere.

The pre-crystallized polyester resin preferably has a degree of crystallization of 20 to 50%. The so-called solid-phase polycondensation reaction of the polyester resin does not proceeds depending on this pre-crystallization treatment, so that the intrinsic viscosity of the pre-crystallized polyester resin is the same as that of the polyester resin obtained just after the liquid-phase polycondensation, and therefore, the difference in intrinsic viscosity between the pre-crystallized polyester resin and the polyester resin obtained before the pre-crystallization is usually 0.06 dl/g or less.

The solid-phase polycondensation process is attained in at least one stage, wherein the temperature is 190 to 230°C and preferably 195 to 225°C and the pressure is 98 to 0.001 MPaG (1 kg/cm$^2$G to 10 Torr) and preferably normal pressure to 0.01 MPaG (100 Torr) in an atmosphere of inert gas such as nitrogen, argon or carbon dioxide gas. Nitrogen gas is desirable as the inert gas to be used.

The granular polyester resin obtained through such a solid-phase polycondensation process may be treated with water according to, for example, the method described in Japanese Published Examined Application No. 7-64920. This water treatment is carried out by bringing the granular polyester resin into contact with water, steam, inert gas containing steam, steam-containing air or the like.

The intrinsic viscosity of the granular polyester resin obtained in this manner is usually 0. 60 dl/g or more, preferably 0.60 to 1.00 dl/g and more preferably 0.75 to 0.95 dl/g.

The process of producing a polyester resin which involves the aforementioned esterification process and polycondensation process may be carried out in any of a batch system, semi-continuous system and continuous system.

The content of titanium in the polyethylene terephthalate obtained in this manner is in the range from 1 to 30 ppm, preferably 5 to 30 ppm andparticularlypreferably 5 to 20 ppm. When magnesium is used, the content of magnesium is in the range from 1 to 20 ppm and particularly preferably 1 to 15 ppm. The ratio by weight (Mg/Ti) of magnesium to titanium is 0.01 or more, preferably in the range from 0.06 to 10 and particularly preferably in the range from 0.06 to 5. The content of chlorine in the polyethylene terephthalate is in the range from 0 to 1,000 ppm and preferably 0 to 100 ppm.

Such a polyethylene terephthalate like this is superior in hue and particularly in transparency. The polyester produced in this manner may be compounded of conventionally known additives such as a stabilizer, releasing agent, antistatic agent, dispersant and colorants such as dyes and pigments. These additives may be added in any stage of the process of producing a polyester and may be added by a master batch prior to molding processing.

When molding the bottle of the present invention, there are a method in which the above polyethylene terephthalate is extruded in a molten state to form a tube-like parison and then, the parison is kept in a mold having a desired shape and then air is blown into the mold to expand the parison along the mold, thereby producing a hollow molded article, and a method in which a preform is produced from the above polyethylene terephthalate by injection molding, the preform is heated to a temperature suitable to stretching, then the preform is kept in a mold having a desired shape and then air is blown into the mold to set the preform to the mold, thereby producing a hollow molded article.

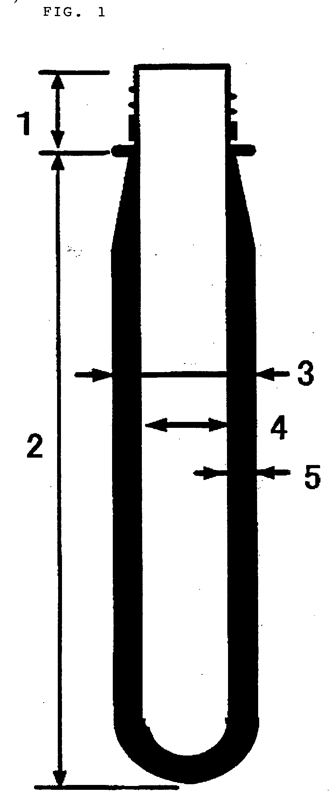

The preform is obtained by injecting the polyethylene terephthalate into a closed cylindrical mold as shown in Fig. 1 to mold. A known method may be used for the injection molding of the preform, wherein the preform is inj ection-molded at a molding temperature of 270 to 300°C in a molding cycle of 50 to 90 seconds.

The inside diameter and outside diameter of the preform may be selected according to the capacity and wall thickness of the hollow bottle to be produced. When a hollow bottle having a capacity of 500 ml and a body wall thickness of 500 $\mu$m or more to 650 $\mu$m or less is subjected to blow molding, the preform preferably has an inside diameter of 10 to 15 mm, an outside diameter of 18 to 27 mm and a wall thickness of 4.5 to 6 mm. Similarly, when a hollow bottle having a capacity of 1600 ml and a body wall thickness of 500 $\mu$m or more to 650 $\mu$m or less is subjected to blow molding, the preform preferably has an inside diameter of 20 to 32 mm, an outside diameter of 30 to 39 mm and a wall thickness of 5 to 7 mm.

Then, the preform is subjected to hollow blow molding in which it is kept in a mold and gas such as air is blown into the mold to expand the preform along the mold, thereby producing a hollow molded article. The stretch ratio of blow molding is preferably as follows: stretch ratio in the longitudinal direction of the preform: about 1.5 to 2.5 and stretch ratio in the circumferential direction of the preform: about 3 to 4. The outside surface temperature of the preform when the preform is molded is usually 100 to 120°C and preferably 105 to 115°C.

(Hollow bottle)

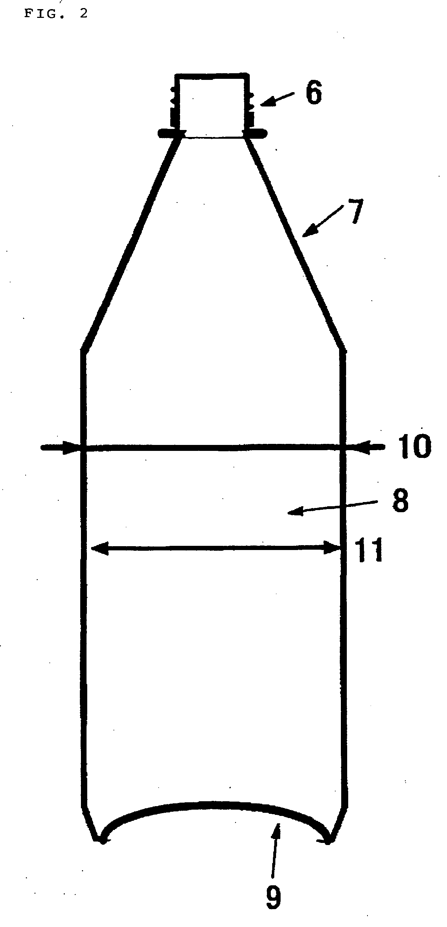

The hollow bottle of the present invention comprises, as shown in Fig. 2, a vent plug portion 6, a conical shoulder portion 7, a cylindrical body portion 8 and a closed bottom portion 9.

The density of the vent plug portion is preferably in the range from 1337 to 1343 kg/m$^3$. The shape of the vent plug portion is preferably a form allowing a screw cap (for example, "Euro Lok", manufactured by Alcoa.) to be set to the vent plug portion. For example, shapes such as "Alcoa 1716" presented from Thread Finishi Review Sub-Committee Members are preferable.

The density of the shoulder portion is preferably in the range from 1350 to 1375 kg/ m$^3$ and more preferably in the range from 1355 to 1365 kg/ m$^3$. The wall thickness of the shoulder portion is preferably in the range from 600 to 800 $\mu$m. The shoulder portion may have irregularities and a pattern from the viewpoint of the retention of strength and design.

The density of the bottom portion is preferably in the range from 1335 to 1355 kg/ m$^3$ and more preferably in the range from 1335 to 1345 kg/ m$^3$. The wall thickness of the bottom portion is preferably in the range from 1 to 4 mm. The bottom portion may have irregularities and a pattern from the viewpoint of the retention of strength and design. In order to improve strength, a hemispherical form caved inside as shown in Fig. 2 is preferable.

(Bottle body portion)

The shape of the bottle body portion is preferably a cylindrical form. In this case, the cylindrical form is not limited to a sectionally complete circle and may be a form such as an elliptical form. A bottle having a cylindrical body portion is preferable because the stretch ratio in the circumferential direction is constant in all portions, so that the mechanical strength of the bottle is kept when the preform is molded into a hollow bottle by hollow blow molding. Also, when carbonated drinks and the like are filled, the pressure in the bottle is high. If the section has a circular form at this time, the pressure is evenly distributed so that the strength is kept and therefore the circular section is preferable.

(Body portion density)

In the hollow bottle of the present invention, the density of the bottle body portion is preferably in the range from 1355 to 1365 kg/m$^3$. When the density is in the range from 1355 to 1365 kg/ m$^3$, this is preferable because the mechanical strength of the bottle is retained. The density is measured using a density gradient tube. A solution having a density range from about 1320 kg/ m$^3$ to 1360 kg/ m$^3$ and a solution having a density range from about 1360 kg/ m$^3$ to 1420 kg/ m$^3$ by using zinc chloride, hydrochloric acid and water are prepared and may be used in the density gradient tube.

(Body portion thickness)

In the hollow bottle of the present invention, the thickness of the body portion is 500 $\mu$m or more, preferably 500 $\mu$m or more to 650 $\mu$m or less and more preferably 550 $\mu$m or more to 650 $\mu$m or less. When the wall thickness of the body portion is 500 $\mu$m or more, this is preferable because mechanical strength which stands to repetitive use is obtained. The bottle wall thickness is measured at a body portion stretched sufficiently. When the bottle capacity is 1600 ml, a smooth portion free from irregularities and bents on the curved surface is selected from the portions having a height of 140 mm or more to 210 mm or less from the bottom as the portions to be measured. In the case where irregularities are formed on the body portion from the reason for the retention of strength and the like, an irregular portion and a step portion are avoided.

(Cooling-down crystallization temperature)

The cooling-down crystallization temperature of the hollow bottle of the present invention is 170°C or less and preferably 168°C or less. When the cooling-down crystallization temperature exceeds 170°C, the transparency of the bottle is sometimes deteriorated.

In order to drop the cooling-down crystallization temperature to 170°C or less, the content of titanium in the polyester is made to be preferably 1 ppm or more to 30 ppm or less and more preferably 5 ppm or more to 30 ppm or less.

Also, the content of an antimony atom is made to be preferably 100 ppm or less and particularly preferably 50 ppm or less. Also, the total content of calcium, strontium, barium and manganese is preferably 5 ppm or less as atoms. When the content of antimony atom exceeds 100 ppm or the total content of calcium, strontium, barium and manganese exceeds 5 ppm, the cooling-down crystallization temperature sometimes exceeds 170°C.

The cooling-down crystallization temperature can also be lowered by increasing the copolymerization monomer components to decrease the content of terephthalic acid to 97 mol% or less based on all dicarboxylic acid components or to decrease the content of ethylene glycol to 97 mol% or less based on all diol components. However, the mechanical characteristics and productivity of the polyester hollow bottle are sometimes impaired. Although it is possible to lower the cooling-down crystallization temperature by increasing the intrinsic viscosity to 0.82 dl/g or more, the productivity of the polyester hollow bottle is sometimes impaired.

(Measurement of the cooling-down crystallization temperature)

As to the sample to be measured, the body portion where th superiority in transparency is easily judged is used. As to the position to be measured, the body portion of the bottle is cut off from the position at a height ranging from 140 mm or more to 210 mm or less from the bottom portion and dried at 150°C for 5 hours under vacuum to make a test specimen which is subjected to the test.

The cooling-down crystallization temperature (Thc) is measured using a differential scanning calorimeter in the following condition.

Atmosphere: In a nitrogen atmosphere.

Pretreatment: The temperature of the sample is raised at a rate of 320 °C/min from 30°C to 290°C, the sample is kept at 290°C for 10 minutes, then the sample is cooled to 30°C at a rate of 320 °C/min and the sample is kept at 30°C for 10 minutes.

Measurement: The temperature of the sample is raised at a rate of 10 min/min from 30°C to 290°C, the sample is kept at 290°C for 10 minutes, then the temperature of the sample is dropped to 30°C at a rate of 10 degrees/min. The temperature of crystallization when the temperature is dropped is defined as Thc.

(Intrinsic viscosity)

The intrinsic viscosity of the hollow bottle of the present invention is in the range from usually 0.70 to 0.86 dl/g, preferably 0. 74 to 0. 82 dl/g and more preferably 0.77 to 0.82 dl/g. When the intrinsic viscosity is 0.74 dl/g or more, this is preferable because the strength required to stand to repetitive use is obtained. When the intrinsic viscosity is 0.82 dl/g or less, this is preferable from the viewpoint of production efficiency.

In the method of measurement, the body portion of the bottle is cut off and dissolved in 1,1,1-trichloroethane/phenol = 1/1 (weight ratio) to calculate the intrinsic viscosity from the viscosity of the solution measured at 25°C.

(Melt viscosity)

The melt viscosity of the hollow bottle of the present invention is in the range from usually 230 to 340 Pa·s and preferably 250 to 320 Pa·s. When the melt viscosity is 230 Pa·s or more, this is preferable because the strength required to stand to repetitive use is obtained. When the melt viscosity is 340 Pa·s or less, this is preferable from the viewpoint of production efficiency.

The melt viscosity is measured in the following manner: when a resin melted at a fixed temperature is extruded from a nozzle at a fixed rate using sufficiently dried sample, the viscosity of the resin is measured. The value of the viscosity measured at 270°C and a shear rate of 1333 sec.[-1] is used.

Because the melt viscosity is a value specific to the resin, any portion of the sample to be measured may be used. However, the body portion of the molded article is stretched so that there is the case where it takes time to melt the body portion, and it is therefore preferable to use the vent plug portion to measure.

(Haze)

The haze of the sample is measured at the body portion where the superiority in transparency is easily judged. As to the position to be measured, the body portion of the bottle is cut off from the position at a height ranging from 140 mm or more to 210 mm or less from the bottom portion. The body portion cut off from the bottle is measured using NDH20-D manufactured by Nippon Denshoku Industries Co., Ltd. When the thickness of the body portion is 500 $\mu$m to 550 $\mu$m, the value of haze is preferably 2.0% or less. When the thickness of the body portion is 550 $\mu$m to 600 $\mu$m, the value of haze is preferably 2.5% or less. When the thickness of the body portion is 600 $\mu$m to 650 $\mu$m, the value of haze is preferably 3.0% or less. When the thickness of the body portion is 650 $\mu$m or more, the value of haze is preferably 3.5% or less.

Examples

The present invention will be explained by way of examples, which, however, are not intended to limit the present invention.

(Example 1)

(Preparation of a titanium catalyst solution)

500 ml of deionized water was weighed and taken in a 1000 ml glass beaker, which was then cooled in an ice bath and 5 g of titanium tetrachloride was added dropwise with stirring. After the generation of hydrogen chloride was stopped, the beaker was taken out of the ice bath, the solution was adjusted to pH 9 by adding an aqueous 25% ammonia at ambient temperature with stirring. Then, the resulting solution was adjusted to pH 5 by adding dropwise an aqueous 15% acetic acid solution at ambient temperature with stirring. The generated precipitate was separated by filtration. The precipitate after washed was made into a slurry having a slurry concentration of 2.0% by weight by using an aqueous 30 % by weight ethylene glycol solution and the resulting slurry was kept as it was for 30 minutes. Then, the slurry was subjected to granulation drying using a two-fluid nozzle system spray drier at 90°C to obtain a solid hydrolysate (solid titanium-containing compound).

The distribution of particle diameter of the resulting solid titanium-containing compound was 0.5 to 20 μm and the average particle diameter of the solid titanium-containing compound was 1.8 μm.

The content of titanium metal measured by an ICP analysis method was 34.8% by weight in the solid titanium-containing compound.

It was confirmed by elemental analysis, EXAFS analysis and 13C-NMR analysis that the solid titanium-containing compound contained titanium, oxygen, carbon and hydrogen and had a Ti-O-C bond. Also, the maximum solubility of the solid hydrolysate was 3,000 ppm in ethylene glycol, the carbon content of the solid titanium-containing compound was 11.6% by weight and the ratio by weight of titanium to carbon (Ti/C) in the solid titanium-containing compound was 3.

102 g of ethylene glycol and 18 g of glycerin were weighed and take in a 200 ml glass flask and 1.74 g of sodium hydroxide was added to the mixture to dissolve it. To this solution was added 3.38 g of the above solid titanium-containing compound and the mixture was heated at 120°C for 30 minutes to dissolve the solid titanium-containing compound to prepare a titanium-containing solution that was the catalyst used for the production of a polyester. The content of a titanium metal in the titanium-containing solution which was measured by an ICP analysis method was 1.0% by weight. Also, the HAZE value of this solution which was measured using a haze meter (ND-1001DP, manufactured by Nippon Denshoku Industries Co., Ltd.) was 1.0%.

(Production of a polyester)

A slurry prepared by mixing 6,458 parts by weight/hour of high-purity terephthalic acid and 2,615 parts by weight/hour of ethylene glycol were continuously supplied to the inside of a reactor in which 33,500 parts by weight of the reaction solution (steady operation) was retained in advance, to run an esterification reaction under the condition in nitrogen atmosphere at 260°C and 0.9 kg/cm2 G (0.09 MpaG). In this esterification reaction, a mixed solution of water and ethylene glycol was distilled.

The esterified products (low-grade condensates) were successively withdrawn from the system under control such that the average retention time of these products in the reactor was 3.5 hours.

The number average molecular weight of the low-grade condensate obtained from ethylene glycol and terephthalic acid was 600 to 1,300 (trimer to pentamer).

The prepared titanium catalyst solution was used as the polycondensation catalyst to run a polycondensation reaction of the low-grade condensate obtained above.

As to the amount of each catalyst, the titanium catalyst solution was added in an amount of 15 ppm in terms of a titanium atom based on the produced polyethylene terephthalate and phosphoric acid was added in an amount of 6 ppm in terms of a phosphorous atom based on the produced polyethylene terephthalate. The polycondensation of the resulting mixture was carried out in the condition of 285°C and 0.1 kPa (1 Torr) to measure the time required to obtain a liquid polymer product polyethylene terephthalate having an intrinsic viscosity of 0.62 dl/g.

Next the obtained liquid polymer product polyethylene terephthalate was treated at 170°C for 2 hours to carry out pre-crystallization, and then heated at 215°C in a nitrogen gas atmosphere to increase the molecular weight by solid-phase polymerization until the intrinsic viscosity was increased to 0.81 dl/g from 0.62 dl/g. The time required for the solid-phase polycondensation in this case was 9 (hours).

(Formation of a bottle by molding)

The obtained polyethylene terephthalate was dried at 170°C for 4 hours by using a dehumidifying air drier. The content of water in the dried resin was 50 ppm or less. The dried polyethylene terephthalate was first molded using an injection molding machine (M-100, manufactured by Meiki Co., Ltd.) in the following condition: cylinder working temperature: 280°C, molding cycle: around 60 seconds, to obtain a preform.

The inside diameter, outside diameter and wall thickness of the preform was 21 mm, 32 mm and 6 mm respectively. The obtained preform was subjected to blow molding using a blow molding machine (SBO1, manufactured by Sidel) at a preform temperature range from 105 to 115°C, to obtain a bottle.

The stretch ratios were 2.1 and 3.5 in the longitudinal direction and circumferential direction of the preform respectively.

The bottle had a capacity of 1600 ml and had a cylindrical form with no irregularity in its body portion. The bottom portion of the bottle was designed to have a shape caved inside.

The inside diameter and outside diameter of the body portion were about 94 mm and about 95 mm respectively. The wall thickness of the body portion of the bottle was 610 $\mu$m.

The wall thickness of the body was measured by cutting off a fragment which was 30-mmby 30-mm square from the smooth body portion at a height of 170 mm from the bottom portion. The density of the body portion was 1360 kg/ m$^3$. The shoulder portion had a wall thickness of 650 $\mu$m and a density of 1358 kg/ m$^3$. The bottom portion had a wall thickness of 2.5 mm and a density of 1338 kg/ m$^3$.

(Measurement of cooling-down crystallization temperature (Thc))

The body portion of the obtained bottle was cut off and dried at 150°C for 5 hours under vacuum to obtain a test specimen, whichwas then subjected to a differential scanning calorimeter (DSC, manufactured by Perkin Elmer Inc.) to measure under the following condition.

Pretreatment: The temperature of the sample was raised at a rate of 320 °C/min from 30°C to 290°C, the sample was kept at 290°C for 10 minutes, then the sample was cooled to 30°C at a rate of 320 °C/min and the sample was kept at 30°C for 10 minutes.

Measurement: The temperature of the sample was raised at a rate of 10 min/min from 30°C to 290°C, the sample was kept at 290°C for 10 minutes, then the temperature of the sample was dropped to 30°C at a rate of 10 degrees/min. The temperature of crystallization when the temperature was dropped was defined as Thc.

(Transparency of the body portion of the bottle)

The body portion (smooth portion) which was 40-mm by 40-mm square was cut out of the obtained bottle and the haze value of this specimen was measured three times by using a haze meter (NDH-20D, manufactured by Nippon Denshoku Industries Co., Ltd.) to evaluate the transparency by an average of these haze values.

(Amount of metals)

Metal atoms contained in the bottle was quantitatively measured by fluorescent X-rays.

(Measurement of intrinsic viscosity)

The body portion of the obtained bottle was cut off to measure its intrinsic viscosity.

(Measurement of the pressure-proof strength of the bottle)

The obtained bottle was stored in an oven kept in the condition of 40°C and 90RH (relative humidity) for one week. After stored for one week, the bottle was taken out and water was introduced into the bottle at a flow rate of 50 cc/sec. until the bottle was ruptured, to find a maximum internal pressure in the bottle (hydraulic pressure) as the pressure-proof strength.

(Measurement of melt viscosity)

First, pellets which were 1 by 1 mm square to 3 by 3 mm square were cut from the vent plug portion of the obtained hollow blow molding bottle. In this example, a pellet which was 2 by 2 mm square was used. The pellet was placed in a 50 cc glass screw vial bottle and was dried in the condition of 150°C and 16 hours by a vacuum drier. Although no particular limitation is imposed on the time required until the measurement since the drying treatment, it is necessary to prevent the pellet from absorbing moisture by storing it in a container through which nitrogen was allowed to flow. If the moistened sample is used for the measurement, hydrolysis is caused when it is measured, making it difficult to make accurate measurement.

Next, the melt viscosity was measured. The melt viscosity was obtained by measuring the molten resin when the resin melted at a fixed temperature was extruded from a nozzle at a fixed rate. As the measuring device, Cabirograph 1B manufactured by Toyo Seiki Seisaku-Sho, Ltd. was used. As the nozzle, one having a hole diameter of 1.0 mm and a hole length of 30 mm was used. The dried pellet was sampled in an amount of 15 g and poured into a melting cylinder adjusted to 270°C. The pellet was kept in this condition for 6 minutes to melt the resin. Then, a metal bar called a cross head set to the device was inserted into the cylinder to extrude the resin from the nozzle. As to the rate of extrusion, the resin was extruded at a rate of 100 mm/sec. The extrusion rate was converted into shear rate by using the following

equation.

$$\text{Shear rate} = 2 \times V \times 100/(15 \times D^3)$$

where:

V : extrusion rate (mm/sec), D: hole diameter of the nozzle (mm).

Therefore, as the melt viscosity, a value was used which was obtained when the shear rate was as follows: shear rate = $2 \times 100 \times 100/(15 \times 1^3)$ = 1333.

(Evaluation of anti-stress cracking characteristics of the bottle)

The obtained bottle was stored in an oven kept at 40°C under 90 RH (relative humidity) for one week. After one week, the bottle was taken out and 1500 cc of water was filled in the bottle. 23 g of sodium bicarbonate and 10 g of citric acid were added and blended with the water in the bottle and the bottle was sealed with a cap to adjust the pressure in the bottle to about 4.0 GV (gas volume). The pressure in the bottle was about 0.5 MPa at 23°C. Then, a surfactant (Slider 205) was applied to the bottom of the bottle and again stored in an oven kept in the condition of 40°C and 90 RH (relative humidity) for one week to observe the state of deformation of the bottom portion and body portion. In the evaluation, the case where there is no change in outward appearance is evaluated as "no change" and in the case where there is a change in outward appearance, the place (for example, the body portion and the bottom portion) and the type of deformation (for example, cracks and breakdown) are observed.

(Comparative Example 1)

A polyethylene terephthalate and a molded article were obtained in the same manner as in Example 1 except that antimony acetate was used in the amount based on an antimony atom as shown in the table in place of the Ti catalyst and cobalt acetate was used as a hue regulator. The product has high crystallization temperature and is inferior in transparency.

(Comparative Example 2)

A resin and a molded article were obtained in the same manner as in Comparative Example 1 except that the solid-phase polymerization time was changed to 13 hours. A longer polymerization time is required to increase the molecular weight of the resin and the product is also inferior in transparency to Example 1.

(Comparative Example 3)

A resin and a molded article were obtained in the same manner as in Comparative Example 1 except that the amount of the isophthalic acid component among all dicarboxylic acid units was changed to 5 mol%, the solid-phase polymerization temperature was changed to 200°C and the solid-phase polymerization time was changed to 24 hours. Because the amount of the isophthalic acid copolymer is increased and the melting point is therefore low, so that the solid-phase polymerization temperature cannot be raised, it takes time as long as two times the solid-phase polymerization time of Example to obtain the same IV as that of Example. Also, the increase in the amount of the isophthalic acid brings about less pressure-proof strength and less anti-stress cracking characteristics than those of Example 1.

[Table 1]

| | | Ex. 1 | Comp. Ex. 1 | Comp. Ex. 2 | Comp. Ex. 3 |
|---|---|---|---|---|---|
| Diol monomer | EG (mol %) | 100 | 100 | 100 | 100 |
| Dicarboxylic acid monomer | TA (mol%) | 98 | 98 | 98 | 95 |
| Dicarboxylic acid monomer | IA (mol%) | 2 | 2 | 2 | 5 |
| Type of catalyst metal | | Ti | Sb | Sb | Sb |
| Amount of catalyst metal in bottle | (ppm) | 15 | 230 | 230 | 230 |
| Solid polymerization temperature | (°C) | 215 | 215 | 215 | 200 |
| Solid-phase polymerization time | (hour) | 9 | 9 | 13 | 24 |
| Bottle IV | (dl/g) | 0.78 | 0.78 | 0.83 | 0.77 |
| Melt viscosity at 270°C | Pa·S | 280 | 280 | 350 | 270 |
| Haze of body portion of bottle | (%) | 2.5 | 4 | 3.4 | 2.8 |
| The | (°C) | 167 | 174 | 171 | 168 |
| Pressure-proof strength | (Mpa) | 1.6 | 1.6 | 1.8 | 1.1 |
| Anti -stress cracking character -istics | | No change | No change | No change | Changed, cracks of bottom portion |

EG: Ethylene glycol
TA: Terephthalic acid
IA: Isophthalic acid

**Claims**

1.  A hollow bottle comprising a polyester resin containing a dicarboxylic acid unit and a diol unit, and having a vent plug portion, a shoulder portion, a body port ion and a bottom portion, wherein;

    (1) the wall thickness of the bottle body portion is 500 $\mu$m or more; and
    (2) the content of a titanium atom is 1 ppm or more to 30 ppm or less.

2.  A hollow bottle according to Claim 1, wherein:

    (3) the cooling-down crystallization temperature (Thc) of the bottle body portion is 170°C or less.

3.  A hollow bottle according to Claim 1, wherein:

    (4) 97 mol% or more of all dicarboxylic acid units are terephthalic acid and 97 mol% or more of all diol units are ethylene glycol.

4.  A hollow bottle according to Claim 1, wherein:

    (5) the intrinsic viscosity of said polyester resin is in the range from 0.74 to 0.82 dl/g.

5.  A hollow bottle according to Claim 1, wherein:

    (6) the melt viscosity of said polyester resin is in the range from 230 to 340 Pa·s at 270°C and a shear rate of 1333 sec.$^{-1}$.

FIG. 1

FIG. 2

## INTERNATIONAL SEARCH REPORT

| International application No. |
|---|
| PCT/JP2005/002989 |

A. CLASSIFICATION OF SUBJECT MATTER
Int.Cl$^7$ C08J5/00, B29C49/06, B65D1/09//B29K67:00, B29L22:00, C08L67:02

According to International Patent Classification (IPC) or to both national classification and IPC

B. FIELDS SEARCHED

Minimum documentation searched (classification system followed by classification symbols)
Int.Cl$^7$ C08J5/00, B29C49/06, B65D1/09//B29K67:00, B29L22:00, C08L67:02

Documentation searched other than minimum documentation to the extent that such documents are included in the fields searched
Jitsuyo Shinan Koho          1922-1996   Jitsuyo Shinan Toroku Koho   1996-2005
Kokai Jitsuyo Shinan Koho    1971-2005   Toroku Jitsuyo Shinan Koho   1994-2005

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2002-319365 A (Toyobo Co., Ltd.), 21 November, 2000 (21.11.00), Claims; page 4, Par. No. [0028]; page 7, Par. No. [0075]; page 8, Par. Nos. [0079] to [0080]; page 9, Par. No. [0088]; example 4; page 10; talbe 1 (Family: none) | 1-5 |
| X | JP 2001-019755 A (Toyobo Co., Ltd.), 23 January, 2001 (23.01.01), Claims; page 7, Par. No. [0064]; page 9, Par. Nos. [0083] to [0084]; pages 9 to 10; Par. No. [0092]; example 3 (Family: none) | 1-5 |

| ☒ | Further documents are listed in the continuation of Box C. | ☐ | See patent family annex. |
|---|---|---|---|

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search 09 May, 2005 (09.05.05) | Date of mailing of the international search report 24 May, 2005 (24.05.05) |
|---|---|
| Name and mailing address of the ISA/ Japanese Patent Office | Authorized officer |
| Facsimile No. | Telephone No. |

Form PCT/ISA/210 (second sheet) (January 2004)

**INTERNATIONAL SEARCH REPORT**

| International application No. |
|---|
| PCT/JP2005/002989 |

C (Continuation). DOCUMENTS CONSIDERED TO BE RELEVANT

| Category* | Citation of document, with indication, where appropriate, of the relevant passages | Relevant to claim No. |
|---|---|---|
| X | JP 2001-048972 A (Mitsui Chemicals, Inc.), 20 February, 2001 (20.02.01), Claims; page 9, Par. Nos. [0087] to [0088]; page 10, Par. Nos. [0104] to [0105]; page 11, Par. No. [0112]; page 12; table 1 (Family: none) | 1-5 |
| X | JP 2002-020475 A (Mitsubishi Chemical Corp.), 23 January, 2002 (23.01.02), Claims; page 9, Par. Nos. [0056], [0061], [0063]; page 11; table 1 & EP 1099720 A2 page 10, Par. No. [0092]; page 11, Par. Nos. [0097] to [0099]; pages 13 to 15; table 1 & AU 200071478 A & US 6500915 B1 | 1-5 |
| X | JP 2003-301094 A (Toyobo Co., Ltd.), 21 October, 2003 (21.10.03), Claims; pages 15 to 16; Par. Nos. [0134] to [0137]; page 20; table 1 (Family: none) | 1-5 |
| X | JP 2003-306542 A (Toyobo Co., Ltd.), 31 October, 2003 (31.10.03), Claims; page 6, Par. No. [0038]; page 14, Par. No. [0114]; pages 14 to 15; Par. Nos. [0117] to [0118]; pages 16 to 17; Par. No. [0137]; example 4; page 18, table 1 (Family: none) | 1-5 |
| A | JP 2000-319373 A (Toyobo Co., Ltd.), 21 November, 2000 (21.11.00), Claims; page 8, Par. No. [0070]; pages 9 to 10: Par. Nos. [0093] to [0094] (Family: none) | 1-5 |
| P,A | JP 2004-217750 A (Teijin Ltd.), 05 August, 2004 (05.08.04), Claims; page 10, Par. Nos. [0053] to [0054]; page 12, Par. No. [0083]; page 19, table 1; page 20, Par. No. [0130] (Family: none) | 1-5 |
| P,A | JP 2004-224858 A (Teijin Ltd.), 12 August, 2004 (12.08.04), Claims; page 10, Par. Nos. [0053] to [0054]; page 12, Par. No. [0083]; page 16, table 1; pages 16 to 17; Par. No. [0107] (Family: none) | 1-5 |

Form PCT/ISA/210 (continuation of second sheet) (January 2004)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7064920 B

**Non-patent literature cited in the description**

- SATURATED POLYESTER RESIN HANDBOOK. The Nikkan Kogyo Shimbun Ltd, 1989